# EUROPEAN PATENT APPLICATION

(11) **EP 4 353 780 A1**
(43) Date of publication of application: **17.04.2024**
(21) Application number: 22382984.7
(22) Date of filing: 14.10.2022
(51) Int. Cl.: C08L 77/00, C08L 3/02, C08J 5/18, B32B 27/34

(54) **POLYAMIDE - THERMOPLASTIC STARCH (TPS) ALLOYS**

(71) Applicant: UBE Corporation Europe, S.A.U., 12100 El Grao de Castellón (Castellón) (ES)
(72) Inventor: DEVIS CHESA, Alejandro, 12100 El Grao de Castellón (Castellón) (ES); SALVA SAEZ, Sergi, 12100 El Grao de Castellón (Castellón) (ES); DESFILIS BARCELÓ, Francisco, 12100 El Grao de Castellón (Castellón) (ES)
(74) Representative: Ungria López, Javier

(57) **Abstract**

The present invention is directed to a polyamide - thermoplastic starch (TPS) alloy with improved barrier properties, resistances against tear and flex-crack (Gelbo flex testing) higher softness and superior breathability (WVTR). The resulting material shows a rheology and thermal stability that allows to be processed by conventional transformation process such as film, monofilament and tube extrusion, as well as injection. Additionally, the material shows improved biodegradability (lower persistence) under aerobic and anaerobic conditions and reduced CO₂ footprint compared with polyamide 6 100% fossil origin. Multiple materials, having multiple uses and applications can be obtained from the alloy.

## Description

### TECHNICAL FIELD OF THE INVENTION

The present invention pertains to the technical field of Chemical Industry, and more specifically, to the field of polymers, and more particularly to the fields of packaging, industrial and automotive sector.

### BACKGROUND OF THE INVENTION

With the increasing awareness for sustainability and the environment, natural polymers have been the focus of much research directed at forming polymeric materials made of, or derived from, renewable biological materials. Reducing the carbon footprint of plastics used for consumer applications such as packaging is becoming increasingly important.

Additional factors, such as lower processing temperatures and lower energy use in production, make these natural polymers even more favorable when compared to polymers derived exclusively from petroleum or natural gas feedstock.

Starch is an abundant, inexpensive, renewable natural polymer derived from plants. As used herein, the expression starch refers to any starch of natural origin whether processed, chemically modified or treated, including starches such as for example: wheat starch, corn starch, potato starch, and rice starch. Starch can also be derived from plant sources such as cassava, tapioca, and pea. It is a polysaccharide that consists essentially of a blend of amylose and amylopectin. The glass transition temperature of pure dry starch is above its decomposition temperature, and therefore starch does not soften and flow, making it difficult to process. However, starch can be plasticized with relatively low levels of plasticizers (5-50 weight percent, preferably 10-40 weight percent, and most preferably from 10 to 30 weight percent) to produce thermoplastic starch (TPS) which flows at elevated temperatures.

Useful plasticizers are those that are capable of hydrogen bonding with the starch hydroxyl groups, such as water, and polyhydric alcohols like glycerol, ethylene glycol, mannitol and sorbitol.

Thermoplastic starch or TPS is plastic fully biodegradable and cheap, its source being abundant, and it has the advantage of easy modification, thus receiving much attention. Since the eighties in 20th century, flourish along with biodegradable starch-plastics research-and-development activity lead researchers to obtain larger breakthrough to the study of the physical chemical modification of starch, thermoplastic behavior, and mechanical property. Existing polytype starch biodegradation plastics come out both at home and abroad, but its mechanical property shows fragility and is greatly affected by ambient moisture, reasons that have seriously limited the application of thermoplastic starch plastic. Thermoplastic starch alone does not show the same advantages as compared with thermoplastic starch combined with other compounds, showing physical modification, for instance other macromolecular materials, the combination forming a matrix material, which can effectively improve its mechanical property and the water tolerance of thermoplastic starch plastic.

While thermoplastic starch flows at high temperatures, it is a very brittle material, difficult to process, and the properties are poor at high humidity. However, said properties of TPS can be significantly improved by blending with other natural polymers or with synthetic polymers.

In polymer preparation, the production of the finished plastic molding composition (i.e. the compound) starting from the plastic raw materials, with addition of fillers and reinforcing agents, plasticizers, coupling agents, lubricants, stabilizers etc. is named "compounding". Compounding method takes place predominantly in extruders and comprises the steps of delivery, melting, dispersing, mixing, degassing and pressure build-up.

Unfortunately, hydrophilic TPS is difficult to combine with hydrophobic polymers, such as polyolefins and other petroleum-derived polymers, leading a discontinuous, multi-stage morphology and poor mechanical properties.

In view of the drawbacks found in the state of the art, the present invention provides a solution for obtaining a material which is an alloy of TPS and another polymer, which is polyamide (a synthetic polymer).

### RELATED DOCUMENTS

- EP1482804A
- WO2003073861
- US2005112247A
- WO2005033187A
- RU2724250C1
- US2002168518
- EP1397536
- DE60223022
- JP4119259
- RU2311784
- DE102006040282
- CN110483841
- US20120321871A1
- US20130023608A1
- WO2017135847A1

### SUMMARY OF THE INVENTION

The main object of the present invention is an alloy of thermoplastic starch (TPS) and a polyamide matrix showing improved properties, as disclosed in claim 1.

Specifically, the alloy comprises a thermoplastic starch (TPS) and a polyamide (PA), in a TPS/PA ratio between 1:9 and 9:1, wherein the polyamide has a melting point comprised between 175°C and 220°C, and a relative viscosity between 2.40 and 4.10. Any type of starch can be used in the invention; Ithe starch can be from corn, potato, wheat, tapioca or pea starch, or any combination thereof. In a preferred embodiment, the thermoplastic starch is made of a mixture of potato starch and corn starch in a ratio comprised between 9:1 and 1:9.

That is to say, the alloy comprises an amount between 10-90%w/w of thermoplastic starch (TPS) and an amount between 10-90%w/w of polyamide. In the same way, the thermoplastic starch comprises an amount between 10-90%w/w of potato starch and between 10-90%w/w of corn starch.

The melting point (also names as Tm), which is the temperature at which a substance changes from solid to liquid state, is measured following ISO standard 11357 by differential scanning calorimetry (DSC), and the relative viscosity is measured under ISO standard 307, using sulfuric acid 96%.

The relative viscosity can be defined as the resistance of a fluid to flow.

The present invention also relates to articles made from or comprising the alloy.

A second object of the present invention is a material comprising the thermoplastic starch/polyamide alloy disclosed above, in an amount between 5-50%w/w of the total composition. Said material may be a multilayer film.

The alloy is obtained by compounding method, a method that is usually carried out in polymers preparation, and which is another object of the invention. The method for obtaining the alloy comprises:
- heating the polyamide, until a temperature between 210-270°C is reached;
- cooling the polyamide between 25°C and 35° with respect to the previous temperature reached, preferably 30°C, and
- adding the thermoplastic starch, until obtaining a mixture which is the alloy.

Said process is usually carried out in a twin-screw extruders which, for example, are used for the compounding are preferably co-rotating twin-screw extruders with tightly intermeshing screw profile and kneading zones which can be individually temperature-controlled.

A four object of the present invention is a material made of the disclosed alloy, which may be a monolayer film, a multilayer film, a monofilament, a tube, a container and an injected part or a molded article.

And a fifth object is the use of this film for different applications. Said application may depend on the type of article: when a film is obtained, it can be use for packaging (for instance meat packaging) or agriculture (for instance crop protection); when a monofilament is obtained, it can be used for gardening (for instance monofilament), fishing (for instance fishing nets) and 3D printing; when a tube is obtained, it can be use for pneumatic tubes; and when a molded article is obtained, it may be used for packaging (for instance trays) and consumer goods (such as sun glasses).

### DESCRIPTION OF THE INVENTION

The alloy of polyamide and thermoplastic starch (TPS) disclosed in the previous section shows improved barrier properties, oxygen and dioxide carbon transmission rate, resistance against tear and flex-crack (Gelbo flex testing), higher softness and superior breathability (WVTR).

In a preferred embodiment, the melting point of the polyamide is comprised between 185°C and 200°C, being more preferably 190°C, and the relative viscosity of the polyamide is preferably between 3.35 and 3.70, being more preferably of 3.40.

According to the present invention, polyamide is a polymer characterized by the presence of amide groups-(CO-NH)-in the main polymer chain. Preferably the co-polyamide is selected from the group consisting of polyamide 6/6.6, co-polyamide 6/6.6/12, co-polyamide 6/12, or the like. In a preferred embodiment, the polyamide is a co-polyamide 6/6.6 that combines polyamide 6 and polyamide 6.6, also named PA6/6.6. In a particular embodiment, which is preferred, this co-polyamide 6/6.6 consists of 70%-95%w/w of polyamide 6 and 5%-30%w/w of polyamide 6.6. The viscosity of the co-polyamide 6/6.6 is preferably between 3.0 and 4.0 (non-dimensional value), more preferably being 3.4. Said parameter, the viscosity, was measured by/through capillary viscosimeter.

Preferably, the thermoplastic starch has a ratio of potato starch and corn starch comprised between 7:3 and 5:5, that is to say between 50%-70%ww of potato starch and 30%-50% of corn starch. In a particular embodiment, the ratio of potato starch and corn starch is 7:3.

Optionally, the alloy may be combined with one or more additives, in an amount of additives up to 25%w/w of the total combination. Said additive or additives can be selected from the group consisting of: light stabilizers, demolding, anti-blocking agents, chain extending additives, chain shortening additives, optical brighteners, IR absorbers, mold lubricants, polyamide oligomers, antioxidant, heat stabilizers, hydrolysis resistance additive, impact modifiers, pigments, flame retardants, polymer processing additives and mixtures thereof.

To get the alloy having the improved properties, a compounding method as disclosed above is applied to mix the polymers involved in the alloy between the polyamide and the TPS. Compounding takes place predominantly in a compounder machine, which can be an extruder, and comprises the process operations delivery, melting, dispersing, mixing, degassing and pressure build-up.

The polymer obtained using the compounding process is transformed via injection and extrusion actions. The compounder machine (i.e. the extruder) used for this invention is prepared according to the alloy involved. One of the most critical issues is to combine both polymers, i.e. the polyamide and the TPS mentioned above with very high different melting point in order to avoid degradation of TPS and to melt polyamide accordingly. In temperature-sensitive polymers or polymer blends, during the compounding process, it is necessary to apply a profile temperature in which both polymers are melted and combined properly. Compounder machine gives the energy, residence time and melt pressure enough to achieve a good combination between polyamide and TPS. Thanks to the sequential addition and heating of the two compounds, the final mixture is achieved after having heated the PA as needed in view of its melting point, and before adding the TPS to the PA at a temperature that does not cause any degradation thereof.

A twin- or multi-shaft screw extruder, in particular a twin-shaft screw extruder, is preferably used as the compounder machine. More particularly, a twin-shaft screw extruder with co-rotation of the shafts is preferred. Screw elements, which produce a frequent rearrangement of the melt streams and a wide dwell time distribution, are preferred for blending properly both polymers. Improved results are achieved with toothed mixing elements. In addition, screw mixing elements, kneading blocks, eccentric disks or return elements, may be used, among other alternatives.

According to a particularly preferred embodiment, the extruder has a feeding system, at least one melting zone, one or two degassing zones, one or two mixing zones and a metering zone.

The feeding system is preferably a gravimetric feeder, in order to assure a precise dosage of each polymer.

Thanks to the properties of the alloy, a different wide range of applications can be defined, such as packaging, agriculture, gardening, and fishing, among others. The preferred application of the material that comprised the alloy is as a film, which may be a monolayer film or a multilayer film, said film being preferably used for packaging.

Regarding barrier properties, three different gases are analyzed into new films performed: oxygen, carbon dioxide and water vapor. In terms of oxygen transmission rate and carbon dioxide transmission rate, a decreased in the values of the film compared with standard polyamide is observed. Said reduction is more than half of the original value in both barrier properties.

Lower permeability to oxygen is also important, for example in packaging applications. Good oxygen barrier properties lead to increased shelf life as a result of less oxidation of food and beverages, thereby maintaining taste and quality for longer times. This is particularly important because the current trend in the packaging industry is to down gauge films by reducing their thickness to provide lightweight packaging. Thus, an improvement in permeability at equivalent thickness, or equivalent permeability at a much lower thickness, can have significant commercial value. Improved oxygen barrier film is important for packaging a variety of foods and beverages, including (but not limited to) meat, baked foods, snacks, upright pouch juice, confectionery, and various moisture and oxygen sensitive dietary supplements and health and beauty products.

In general terms, the present invention provides novel compositions including TPS/polyamide blends having improved physical properties including barrier properties and increased TPS accessibility over prior art achievements. The invention concurrently provides a novel process for achieving the new compositions.

The alloy may be applied for obtaining an article, for instance an article that may be used for packaging. In a particular embodiment, the article may be made 100% of the alloy, although it is preferably combined with other compounds. In any case, the article is preferably selected from the group consisting of a film, a monofilament, a tube, and a container; the film may be a monolayer film or a multilayer film. In a particular embodiment, the alloy may be combined with other additives, as said before for obtaining articles. In another preferred embodiment, the article may comprise the alloy, which is combined with other materials. For instance, said article may be a film, specifically a multilayer film, wherein it comprises at least one film made of the alloy, preferably in an amount between 5-50%w/w of the total composition.

The articles made from / and/or made of the alloy may be selected from packaging articles, agriculture articles, gardening articles, and fishing articles.

The present invention also comprises a method for obtaining the article made from/of the alloy in any one of its embodiments, said method being selected from the group consisting of injection molding, extrusion, and blow molding.

### BRIEF DESCRIPTION OF THE DRAWINGS

**FIG. 1** shows oxygen transmission rate values differences between a film made of the material that comprises the alloy object of the invention and a polyamide, which is a reference polyamide (OTR; 23°C, 0% RH).
**FIG. 2** shows carbon dioxide transmission rate values differences between a film made of the material that comprises the alloy object of the invention and a polyamide, which is a reference polyamide (CO2 TR; 23°C, 0% RH).
**FIG. 3** shows water vapor transmission rate values differences between a film made of the material that comprises the alloy object of the invention and a polyamide, which is a reference polyamide (WVTR, 40°C, 90% RH).
**FIG. 4** shows biodegradation results differences between a film made of the material that comprises the alloy object of the invention and a polyamide, which is a reference polyamide (biodegradation in compost at 58°C).
**FIG. 5** represents tear load (N) properties differences between a film made of the material that comprises the alloy object of the invention and a polyamide, which is a reference polyamide; MD (Machine direction) and TD (Transverse direction) are shown because said directions are the properties usually tested in films.
**FIG. 6** represents tear resistance (kN/m) properties differences between a film made of the material that comprises the alloy object of the invention and a polyamide, which is a reference polyamide; MD (Machine direction) and TD (Transverse direction) are shown because said directions are the properties usually tested in films.
**FIG. 7** represents the Pinhole resistance differences between a film made of the material that comprises the alloy object of the invention and a polyamide, which is a reference polyamide. Gelbo flex test, 23°C, 1000 cycles; MD (Machine direction) and TD (Transverse direction) are shown because said directions are the properties usually tested in films.
**FIG. 8** represents the Pinhole resistance differences between a multilayer material made of the alloy object of the invention and a reference material. Gelbo flex test (number of holes), 23°C, 1000 cycles; MD (Machine direction) and TD (Transverse direction) are shown because said directions are the properties usually tested in films.
**FIG. 9** represents tear load (N) properties differences between the multilayer film that comprises the alloy object of the invention and the standard material; MD (Machine direction) and TD (Transverse direction) are shown because said directions are the properties usually tested in films.
**FIG. 10** represents tear resistance (kN/m) properties differences; MD (Machine direction) and TD (Transverse direction) are shown because said directions are the properties usually tested in films. Same behavior than Tear Load.
**FIG. 11** shows oxygen transmission rate values differences between a multilayer film made with the material that comprises the alloy object of the invention and a polyamide, which is a reference polyamide (OTR; 23°C, 0% RH).

### EXAMPLES

### Example 1. Film made of the material comprising the TPS/PA alloy according to the present invention

The extrusion of some mixtures of TPS/PA according to the present invention (and defined in Example 2) is carried out in the UBE blown film machine and the structure of the film to be evaluated is monolayer with a thickness of 50µm.

A process is carried out with an extruder for cooling a blown tube thermoplastic extrusion, wherein molten plastic film is extruded from an extrusion die and is expanded into an elongate bubble by trapped encapsulated air between the die and a bubble closing medium including cooperating nip rollers located remotely from the die.

The inflated bubble is pulled through by the air and by the continuous addition of more resin. The continuous pulling upwards creates a seamless tube of thin plastic film. During the lay-flat part of the process, the film is cooled, flattened and wound into rolls.

As a result of the claimed process, an alloy containing 73% polyamide and 27% TPS is obtained. This new alloy and a standard PA used as a reference were extruded using the same extrusion parameters in order to compare them.

### Example 2. Analysis of the property of the monolayer film obtained according to the Example 1.

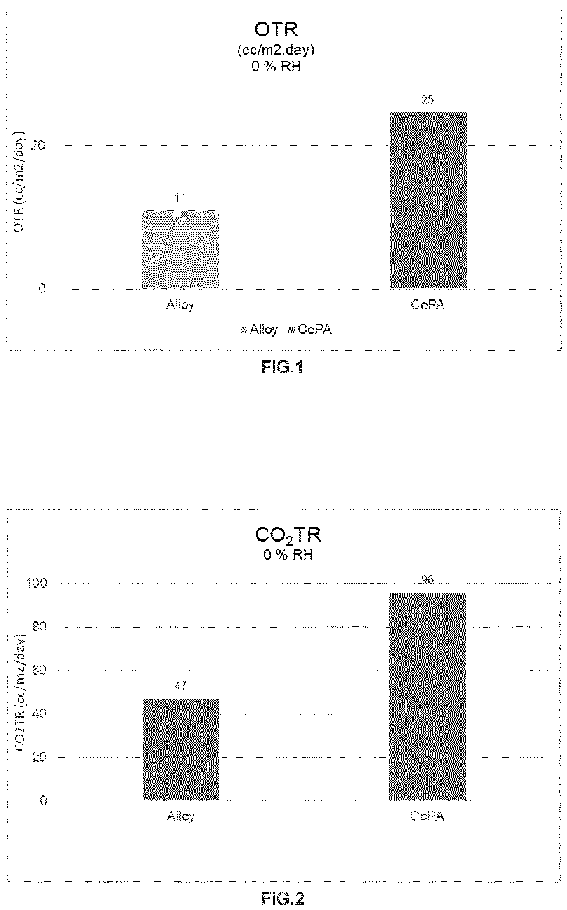

Chart Oxygen Transmission Rate (OTR) measured at 23°C and 0% of relative humidity is shown in Figure 1. When reference polyamide is compared with the alloy product, the OTR is reduced by a little more than half.

Same behavior and results were observed with respect to the Carbon dioxide Transmission rate (CO₂TR), see Fig. 2.

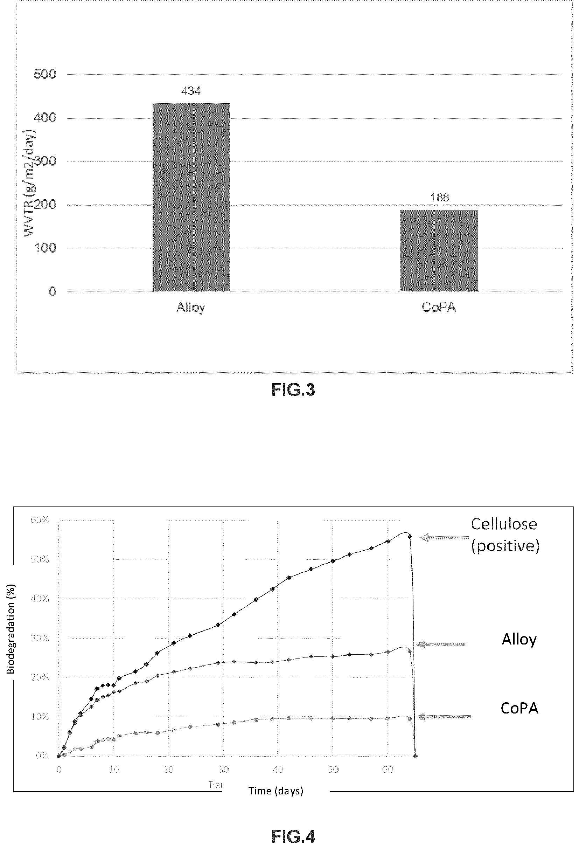

Water vapor transmission rate was also analyzed (see Fig.3) and significant differences were observed comparing the results of the new film with standard polyamide. In relation to this property a high increase value with new films was observed. These results offer to the new films an increase in breathability that can be used in food packaging for some applications where is requested.

Regarding biodegradation properties, the first test carried out shows higher biodegradation than regular Polyamide, more than 16% is increased biodegradation of new material developed compared with regular polyamide (see Fig. 4).

In the present example, mechanical properties were also evaluated, obtaining promising results for the new films obtained with new material developed.

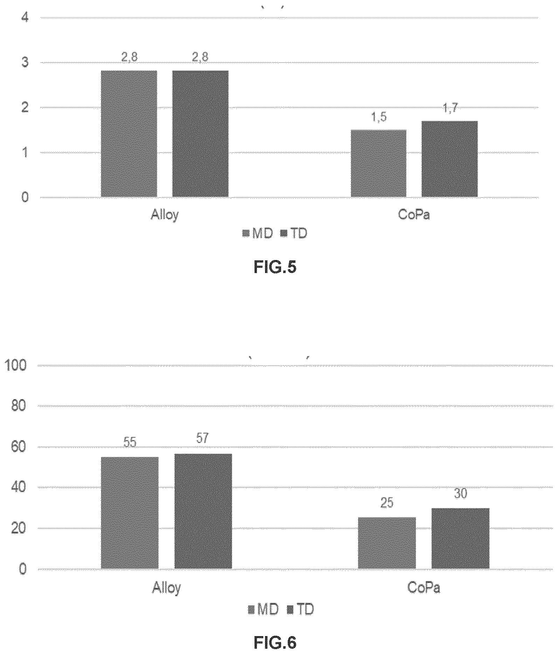

One of the highest differences is in the tear resistance properties. In this property is measured tear load (see Fig. 5) and tear resistance (see Fig. 6) of the new films, and in both cases films containing new material disclosed in the present invention showed higher results than standard polyamide. Improvements in tear load are around 85% in machine direction and 65% in transverse direction. In case of tear resistance improvement is still higher than tear load, being more than 100% in machine direction and around 90% in transverse direction.

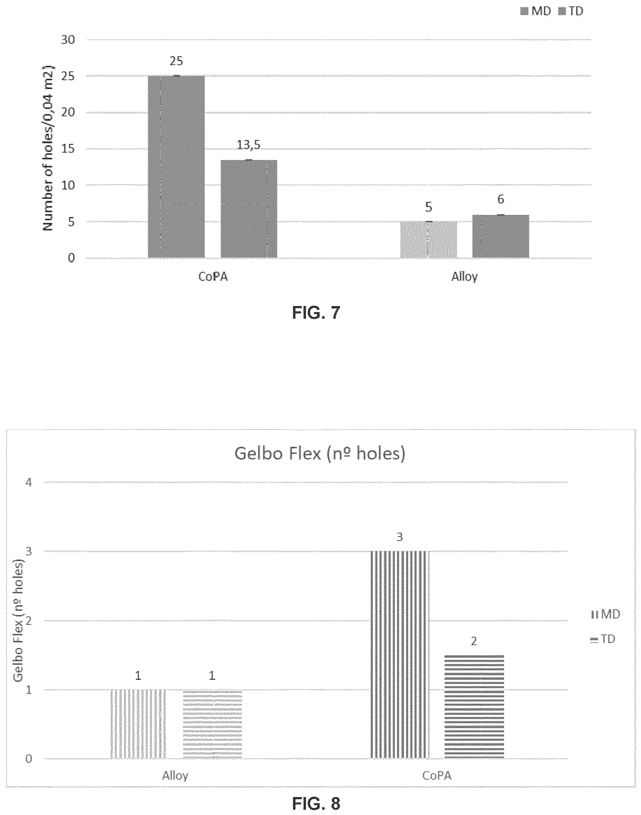

The Gelbo flex test showed a higher softness for the new material than for the standard PA (see Figure 7).

### Example 3. Analysis of the property of the multilayer film obtained according to the present invention.

For this example, multilayer film structures were prepared using same UBE blown film machine as in Example 1.

Typical commercial multilayer film structures, consisting in PE/tie layer/alloy/tie layer/PE, were replicated in order to evaluate film properties containing new alloy and comparing with standard co-polyamide which structure used was, PE/Tie layer/Co-Polyamide/Tie layer/PE. Both thicknesses used were the same, around 170 microns, in order to compare exactly properties from both structures. The alloy obtained in Example 1 is used in this example, that is to say having 73% polyamide and 27% TPS. Percentage of alloy and co-polyamide used in total structure is around 6%.

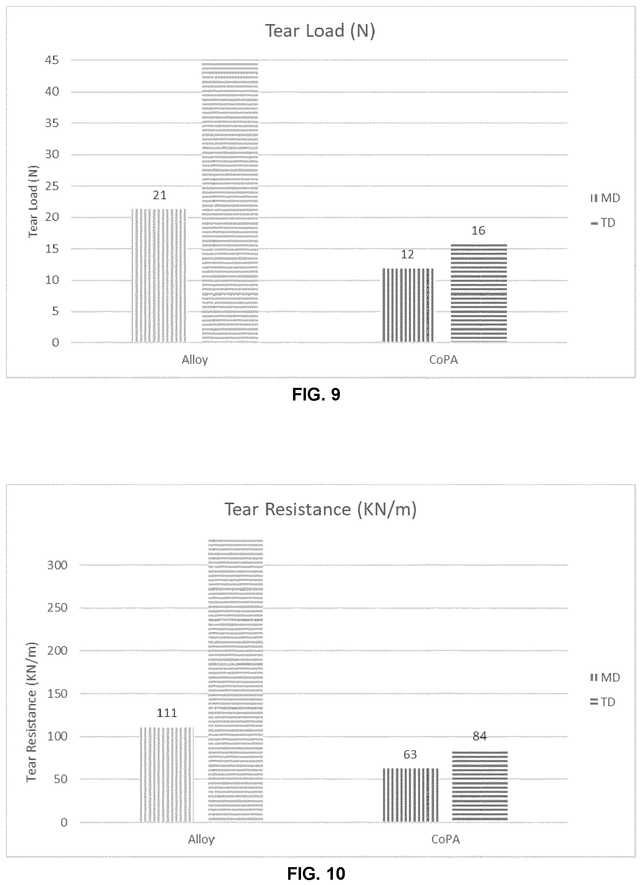

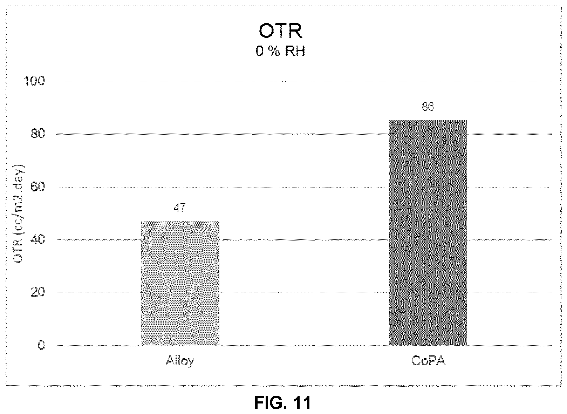

Figures 8 to 11 show the results of the comparison, and the improvements achieve with the object of the invention. For instance, analyzing OTR values, measured at 0% of relative humidity and following ASTM D3985, obtained of both multilayer films, film containing the alloy reduced almost 50% OTR value compared with multilayer film containing standard co-polyamide.

## Claims

1. An alloy of thermoplastic starch (TPS) and a polyamide matrix, **characterized in that** the alloy has a TPS/PA ratio between 1:9 and 9:1, wherein the polyamide has a melting point comprised between 175°C and 220°C, and a relative viscosity between 2.40 and 4.10; and wherein the thermoplastic starch is made of one or more starches selected from the group consisting of corn starch, potato starch, wheat starch, tapioca starch, pea starch and any combination thereof.

2. The alloy of claim 1, wherein the melting point of the polyamide is comprised between 185°C and 200°C, and the relative viscosity of the polyamide is 3.35 and 3.70.

3. The alloy of any one of claims 1 to 2, wherein the polyamide is selected from the group consisting of co-polyamide 6/6.6, co-polyamide 6/6.6/12 and co-polyamide 6/12.

4. The alloy of claim 3, wherein the polyamide is a co-polyamide 6/6.6.

5. The alloy of claim 4, wherein the co-polyamide 6/6.6 consists of 70%-95%w/w of polyamide 6 and 5%-30%w/w of polyamide 6.6.

6. The alloy of any one of claims 4 or 5, wherein the viscosity of the co-polyamide 6/6.6 is between 3.0 and 4.0.

7. The alloy of any one of claims 1 to 6, wherein the thermoplastic starch is made of a mixture of potato starch and corn starch in a ratio comprised between 9:1 and 1:9.

8. The alloy of claim 7, wherein the thermoplastic starch has a ratio of potato starch and corn starch comprised between 7:3 and 5:5.

9. The alloy of any one of claims 1 to 8, wherein the alloy is combined with one or more additives, in an amount of additives up to 25%w/w of the total combination.

10. A compounding method for obtaining the alloy defined in any one of claims 1 to 9, wherein the method comprises:
- heating the polyamide, until a temperature between 210-270°C is reached;
- cooling the polyamide between 25°C and 35° with respect to the previous temperature reached, preferably 30°C, and
- adding the thermoplastic starch, until obtaining a mixture which is the alloy.

11. The method of claim 10, wherein a twin-shaft screw extruder or a multi-shaft screw extruder is used.

12. An article comprising the alloy according to any one of claims 1 to 9.

13. The article according to claim 12, wherein the article is selected from the group consisting of: a film, a monofilament, a tube, a molded article, a container and an injected part.

14. The article according to claim 13, wherein the film is a monolayer film or a multilayer film.

15. The article of any one of claims 13 or 14, wherein the film is a multilayer film, comprising a monolayer film made of the alloy in an amount between 5-50%w/w of the total composition.

16. Use of the article according to any one of claims 12 to 15, for one of the applications selected from the group consisting of: packaging articles, agriculture articles, gardening articles, fishing articles, 3D printing articles, pneumatic tubes, and consumer goods.

17. A method for obtaining the article according to any one of claims 12 to 15, **characterized in that** it comprises one step selected from the group of actions consisting of injection molding, extrusion, and blow molding.
